# EUROPEAN PATENT SPECIFICATION

(11) **EP 0 543 866 B1**
(45) Date of publication and mention of the grant of the patent: **02.11.1995**
(21) Application number: 91914426.1
(22) Date of filing: 13.08.1991
(51) Int. Cl.: D21D 5/26

(54) **METHOD AND APPARATUS FOR STABILIZING AND SIMPLIFYING AN APPROACH FLOW SYSTEM FOR A PAPER-MAKING MACHINE**
VERFAHREN UND VORRICHTUNG ZUR STABILISIERUNG UND VEREINFACHUNG EINES STOFFVERTEILERS FÜR EINE PAPIERMASCHINE
PROCEDE ET APPAREIL POUR STABILISER ET SIMPLIFIER UN DISTRIBUTEUR DE COURANT DE PATE POUR UNE MACHINE A PAPIER

(30) Priority: 14.08.1990 FI 904006
(43) Date of publication of application: 02.06.1993
(73) Proprietor: A. AHLSTROM CORPORATION, 29600 Noormarkku (FI)
(72) Inventor: HENRICSON, Kaj, SF-48100 Kotka (FI); KOHONEN, Raimo, SF-57230 Savonlinna (FI); MANNINEN, Heikki, SF-46810 Ummeljoki (FI); PITKÄNNEN, Raimo, SF-48800 Karhula (FI); VIKIÖ, Pentti, SF-58200 Kerimäki (FI)
(74) Representative: Füchsle, Klaus, Dipl.-Ing.
(86) International application number: FI9100250
(87) International publication number: WO9203613

(56) References cited:
- EP-A- 0 330 387
- Skogsindustrins miljoevardsprojekt, Teknisk sammanfattning, StiftelsenSkogsindustriernas Vattenoch Luftvardsforskning (SSVL), Stockholm 1974, seepage 153, column 2, line 6 - page 154, column 2, line 30.

## Description

The present invention relates to the treatment of pulp before depositing the pulp onto a wire in a paper-making machine. More precisely, the present invention concerns a method and apparatus for stabilizing an approach flow system for a paper-making machine.

Paper is produced on a paper-making machine by distributing an aqueous suspension of pulp in the form of a thin layer onto a forming wire and then removing the water as the first stage of paper production. Before the pulp suspension is deposited onto the wire, air or gas and impurities are removed from the pulp. In order to produce uniform paper, the amount of the pulp in the spray of the aqueous suspension is accurately and continuously adjusted.

Gas is present in pulp suspensions mainly in three forms, namely, in the form of small bubbles, dissolved or chemical bound gas.

The chemically bound gas or dissolved gas seldom causes problems in the pulp and papermaking processes but can cause problems if conditions are changed and bubbles start to form.

Gas bubbles in the fiber suspension can be present as free bubbles in the liquid between the fibers or as bound bubbles attached to fibers. Both bound and free bubbles cause problems in the papermaking processes. Free bubbles cause special problems in the pulp and papermaking processes when they are present in too great an amount. The problems include foam problems, instability of the processes, decreased deaerating, and the like.

The method of the present invention relates to the separation and removal of most of the free air bubbles so that the problems caused by an excess amount of free air bubbles are eliminated.

Total gas removal is generally accomplished by another type of gas removal, so-called mechanical gas separation. With this method, all of the free and bound gas bubbles are removed. Also part of the dissolved gas is removed. This type of gas removal is performed immediately in front of the paper machine forming section to avoid pinholes and other problems on the forming wire. This method, which is described by K.D. Kurz, Tappi Engineering Conference, Sept. 19-21, (1978), is expensive and creates large amounts of foam when the fiber suspension is ejected with high speed onto a metal surface in a vacuum tank.

As pointed out, the traditional degassing assemblies in the pulp and paper industry are remarkably space demanding and hence costly, and the separated gas occurs in large volumes, from which reclaiming and conveying thereof is difficult. The most usual degassing equipment is a tank having a large diameter in which the gas in a gas containing liquid is permitted to rise to the liquid surface of the tank for removal. In order to be certain that a sufficient time period for degassing is given, the diameter of such a tank in large pulp plants can be 10-20 m and the height 5-6 m. It will thus be apparent to persons of ordinary skill that investment costs for a degassing tank of this kind are high and the reclaiming of gas therefrom is difficult.

As mentioned, in pulp and paper production, any existing gas or air results in serious disadvantages which impact on both the process, the product and the pumping of pulp or fiber suspensions. The most important of these disadvantages are:
- problems resulting from air induced foam;
- increased capillarity and pin holes in the final product resulting from excess air;
- instability in conduit lines, valves and screens, etc.
- increased pump cavitation;
- dewatering problems;
- fiber flocculation;
- decreased formability by a wire.

An object of this invention is to eliminate or reduce the severity of the above listed problems.

In the drawings, wherein like reference characters denote similar elements throughout the several views:
FIG. 1 is a diagrammatic view of an approach flow and white water circulation apparatus in accordance with the prior art;
FIG. 2 is a diagrammatic view of an approach flow and white water circulation apparatus in accordance with the present invention; and
FIG. 3 is a schematic illustration of a preferred control circuit for a degassing apparatus for use in the present invention.

As used throughout this specification (including claims), the word "gas" is intended to include any and all gases, whether free, bound or dissolved, including by way of example only air; and the expression "deaerating pump" or "degassing pump" is intended to mean a centrifugal pump capable of separating gas (as above defined) from the working liquid passing through the pump, which includes a gas channel for conveying separated gas from a zone upstream of or in front of the impeller to a zone downstream of or in back of the impeller, said pump further including a vent to permit the removal of said separated gas from the pump. Examples of suitable deaerating pumps are a pump sold as a degassing MC™ pump by the assignee of the present invention, A. Ahlstrom Corporation, another pump sold by said assignee under the trademark AHLSTAR™ equipped with AIRSEP™ degassing. Also as used herein, the term "liquid" is intended not only to embrace liquids as conventionally defined but also slurries and suspensions which flow like liquids or are caused to flow through a deaerating pump like a liquid.

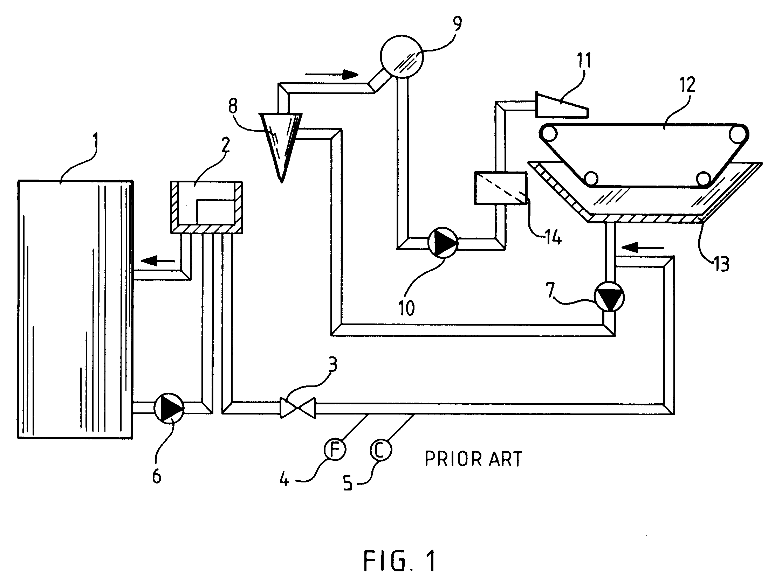

FIG. 1 illustrates a usual prior art approach flow and white water circulation system, also called short circulation system, for a paper-making machine. Referring to FIG. 1 in detail, a tank 1 contains a pulp slurry for producing paper. A pump 6 connected to the outlet of tank 1 charges pulp from tank 1 into the white water circulation via level chest 2 a grammage or regulator valve 3, a fluid volume gauge 4 and a consistency level gauge 5. The purpose of the level chest 2 is to ensure a constant input pressure for the regulator valve 3 so that the pulp flow is as constant as possible. This is important to avoid thickness variations in paper due to varying amounts of pulp fiber in the pulp slurry or suspension. The illustrated prior art system for charging the pulp slurry is good in principle but it is inaccurate when and if the pulp slurry in the tank 1 contains varying amounts of air. Then the weight of the column of slurry before the regulator valve 3 will vary and will cause variations in the pulp amount flowing to the paper-making machine. One purpose of the present invention is to eliminate this problem caused by air.

The expression white water circulation system for the paper-making machine means a system wherein the water removed from the pulp slurry in the forming section of the paper machine is recycled and utilized to dilute the approaching pulp slurry, the consistency of which is between 3-5%, to a consistency between 0.5 - 1.0%, which is a normal consistency when the pulp slurry is deposited by a headbox 11 onto the wire 12. In FIG. 1 the approaching pulp flows via the grammage valve 3 into a fan pump 7, wherefrom it is pumped together with water from a save-all tray 13 through a centrifugal cleaner 8, a deaeration apparatus 9, a headbox charge pump 10 and a screen 14 into the headbox 11, wherefrom the pulp slurry is distributed in the form of a thin layer jet onto the wire 12. From the wire, water, often due to gravity or suction or both, runs through the wire 12 into the save- all tray 13 for return as above described.

When air is mixed in with either the pulp slurry or the water or both, it will cause various problems for the white water circulation system described above. If the air reaches the headbox 11, air bubbles cause empty places in the jet as it is distributed onto the wire which results in holes in the paper web being formed. In order to avoid this, the white water circulation system may be provided with a special deaeration apparatus 9, which is usually a large vacuum tank, wherein air entrained in the white water is separated by means of the under-pressure in the apparatus 9. The water flowing from the wire 12 into the save-all tray 13 picks up sizeable amounts of air and thus causes irregularities in the operation of the pump 7. To reduce the air content of the water, tray 13 is designed to be large, whereby the air is permitted to rise to the surface of the water in the save-all 13 where it passes into the atmosphere. However, a part of the air remains entrained in the save-all tray water which often causes malfunctions of the white water circulation system.

Another object of the present invention is to eliminate these problems of the white water circulation caused by the air as well as to make the big save-all tray unnecessary.

A further object of the present invention is to eliminate problems caused by air and gases to simplify the process and apparatus for circulating white water as well as to decrease construction costs for a plant.

These objects have been achieved by the method and arrangement mentioned in the beginning, the characterizing features of which are presented below. The invention is based on the novel and fundamental insight that gas and air problems can be avoided by removing air and/or gas by means of deaerating and/or degassing pumps, whereby are achieved gas-free or essentially gas-free pumping and pulp flows. According to a preferred embodiment of the invention, the deaerating pump is a centrifugal pump capable of separating gas from pulp slurry and gather said gas centrally in front of the pump impeller and a passage extending from in front of said impeller through the impeller back plate to a location behind the impeller from which the gas is exhausted by means of a vent preferably connected to an under-pressure source, e.g. an exhaust pump. One example of such a pump is the AHLSTAR™ pump with its AIRSEP™ features commercially available from the assignee herein, or the pump illustrated in FIG. 4 of a PCT application filed contemporaneously herewith by J. Elonen & al, based on FI 904003 for METHOD AND APPARATUS FOR FLOTATION SEPARATION, although other pumps may be used instead. In some usages, the input pressure at the suction side of the pump is high enough to expel the separated gas without the need for any exhaust pump and the gas will flow out from the vent of the deaerating centrifugal pump as a result of the input pressure. Another suitable pump which is commercially available from the assignee of the present application, A. Ahlstrom Corporation, is a so-called degassing MC™-pump, which can be used for accomplishing the objects of the invention because the pump has been designed in the first place to eliminate pump cavitation when gas or air containing substances are pumped.

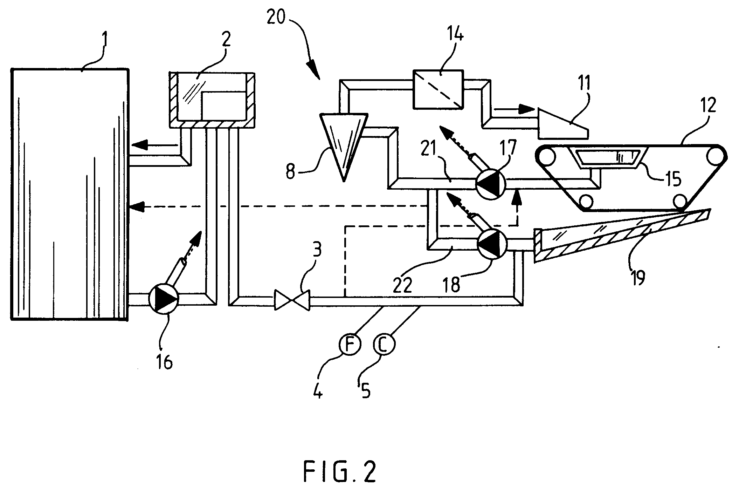

The invention and advantages achieved with said degassing pump are set forth more precisely below with reference to the accompanying FIG. 2.

Referring now to FIG. 2 which is a diagram of the presently preferred embodiment and is thus exemplary of various structures, systems and methods embodying the present invention, the approach flow apparatus incorporates means for supplying pulp slurry or paper stock to the headbox 11 of a paper machine which also includes a forming section comprising a forming wire 12. The pulp slurry supply means here shown is a tank 1 which is connected to the headbox 11 by a pipe system 20.

According to FIG. 2, a first deaerating pump 16 is connected into a pulp slurry line of pipe system 20 on the outlet side of means for supplying pulp slurry, here shown as pulp tank 1. The pump 16 transfers the pulp slurry into a level chest 2, from which it flows through a grammage valve 3 into a white water circulation system comprising a part of pipe system 20. As a result of the deaeration by pump 16, the specific gravity of the column of the pulp slurry immediately in advance of the grammage valve 3 remains constant and a constant flow is thus achieved for the white water circulation. Also the valve 3 operates more regularly as a result of the constant low amount of air remaining entrained in the pulp slurry.

In the white water circulation the water passing through the wire is gathered to be recirculated with one or two pipe branches which will be described more precisely as follows.

A suction box 15 is placed under the wire 12 of the forming section to collect water. The water so collected contains air. The air containing water is fed from suction box 15 through a branch pipe 21 to a second deaerating pump 17 of the deaerating pump design. The preferable consistency of the pulp slurry as it leaves the headbox is about 1%; that is to say, that there exists 99 tons of water per each ton of pulp fiber. The web formed on the wire 12, after dewatering by suction box 15 will have a consistency of about 5%; that is to say that there exists 19 tons of water per each ton of pulp. Thus, through the branch pipe 21 and pump 17 will pass about 80 tons of water for each 100 tons of slurry introduced onto forming wire 12 by headbox 11. By the time the web traverses the entire forming section on wire 12, the consistency of the web is about 10%; that is to say that into a water collection tray 19 will be gathered about 10 tons of water per each ton of pulp fiber. This water will be pumped together with other waters, like waters from wire washing sprays, through a branch pipe 22 by a third deaerating pump 18. In this manner, significant advantages are achieved, namely:
- the elimination of traditional big save-all tray 13 (see FIG. 1), for the purpose of gathering the water removal from the web on the forming wire 12;
- the elimination of the need to separate the air from water collected in a conventional large save-all (such as save-all 13 in FIG. 1 by escape to the surrounding atmosphere through the large surface of such a large save-all;
- the water in branch pipes 21 and 22 at the discharge sides of deaerating pumps 17 and 18 is essentially air-free; and
- suction effect of the deaerating pump 17 can, when so needed, be also employed for imparting a suction effect in suction box 15 under the wire 12, and deaerating pump 18 can, when needed, be employed for sucking water out of the water collection tray 19.

Pulp fibers and water are pumped by the deaerating pumps 17 and 18 through cleaner 8 and screens 14 back into the headbox 11. Between the cleaner 8 and the screens 14 there is no need for any additional pump, but when desired a booster pump may be so placed, especially when the arrangement according to the invention is retrofitted into an existing plant without carrying out any level or piping changes. Moreover, there is no need for the traditional and often used deaeration equipment (such as deculator 9 in FIG. 1) subsequent to the cleaner 8, but when deaeration is desired to further improve the degree of deaeration achieved by the system of FIG. 2, it may be added.

Of course, other alternative systems embodying the invention of FIG. 2 will be readily apparent to persons skilled in the art. The invention is not limited to the lay-out according to FIG. 2. So, for example, the discharge side of pump 18 can be connected directly to the tank 1 and stock may be conducted from the valve 3 to the suction side of the pump 17, all as illustrated by broken lines in FIG. 2. It is also within the scope of the invention to remove totally from the discharge system for the pulp slurry the level chest 2 shown both in FIGS. 1 and 2, whereby the stock pump 16 charges essentially gas-free slurry directly from the pulp slurry supply means such as tank 1 to the suction side of either the pump 17 or pump 18, depending on whether the hook-up is as shown in solid lines or dotted lines in FIG. 2. However, it becomes important to ensure, as by a suitable slurry flow and regulation in the pump 16, a sufficiently stabilized charge into the white water circulation of pipe system 20.

An important advantage of the method and system (or apparatus) according to the present invention is that the system for a paper-making machine is simplified and can occupy a space of smaller vertical extent than prior art systems as exemplified by FIG. 1, thereby reducing construction costs. The big save-all tray 13 of FIG. 1 becomes unnecessary and the big and awkwardly placed deaeration assembly 9 of FIG. 1 also may become unnecessary. Therefore, it becomes possible to decrease to a large degree both apparatus and construction costs.

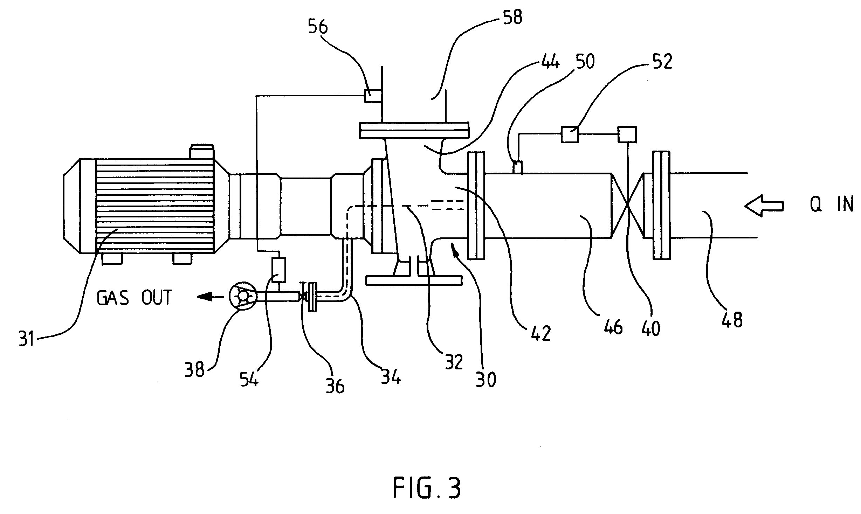

As shown in FIG. 3, the deaerating pump for use with the apparatus and method of the present invention preferably comprises a centrifugal pump 30 with a motor 31 and a channel 32 within the pump which is connected to an exterior gas discharge pipe 34, and via valve 36 to a suction or vacuum pump 38, which can be, for example, a well-known NASH™-pump. The drawing also schematically illustrates control valves 36,40 for controlling the reduced pressure generated by suction pump 30. The centrifugal pump 30 has, as is known, a suction opening 42 and a pressure opening 44. A suction duct 46 is mounted to the suction opening. The duct 46 is connected by a valve 40 to the inlet pipe 48 for the fiber suspension. The control circuit further comprises a pressure sensor 50 connected to the suction duct 48 and a control unit 52 which is connected to valve 40 to regulate the operation of the valve.

In operation, the fiber suspension is drawn by pump 30 into suction duct 46 through valve 40 from inlet pipe 48. The flow is constricted by valve 40 in such a way that a reduced pressure is generated in the suction duct and in the suction opening 42 of the pump thereby facilitating the separation of gas from the fiber suspension. Hence, the flow is throttled as much as possible short of avoiding boiling thereof thereby maximizing air removal. Pressure sensor 50 and control unit 52 maintain the pressure in the suction duct sufficiently high to prevent the suspension from boiling due to the reduced pressure. In this manner the amount of gas separated from the suspension in front of the impeller is as great as possible and the separated gas is discharged from the centrifugal pump 30 via the conventional route. Thus, centrifugal pump 30 is pumping suspension through pressure opening 44 and the gas content of the suspension is considerably lower than that of the suspension in the inlet pipe 48. Control unit 54 and pressure sensor 56 also control the pressure difference between the pressure in the air bubble created in front of the pump impeller and the pressure in discharge pipe 58 to maintain the pressure differential at the desired level.

## Claims

1. Approach flow apparatus for a paper making machine for processing fiber suspension or slurry and for conveying a stabilized suspension or slurry flow to a web forming section (12) of a wire of the paper making machine, the apparatus comprising a pipe system (20) having an outlet piping leading towards the web forming section (12) and an inlet piping, said inlet piping being formed of a first inlet piping beginning from a pulp tank (1) or from a flow control valve (3) located downstream of a level chest (2), and of a second inlet piping in flow communication with the first inlet piping and acting as a so-called short circulation for recycling water drained through the wire, the inlet piping of the pipe system being provided with at least one centrifugal pump for accomplishing the fiber suspension or slurry flow, and the apparatus being further provided with means for removing air and/or gas from the fiber suspension or slurry and with means for discharging the removed air and/or gas to a location outside the pipe system (20), **characterized in that** said gas removing means is a degassing and/or deaerating pump (16) located in the first inlet piping immediately downstream of either the pulp tank (1) or the flow control valve (3).

2. Apparatus according to the claim 1, **characterized in that**:
a) the outlet piping of the said pipe system leads to a headbox (11) of the paper machine for supplying fiber suspension or slurry to the said web forming section (12) of the paper machine wire and for accomplishing thereon the web in a form of a aqueous layer of fiber suspension or slurry; and
b) the apparatus further comprises means (15, 19) for collecting at least partially the water drained from the aqueous layer of the web of the said fiber suspension or slurry in the said forming section (12) of the wire and for conveying the said water to the said second inlet piping of the pipe system (20).

3. Apparatus according to the claim 2, **characterized in that** the means for collecting the water drained from the said fiber suspension or slurry comprises:
- a suction box (15) underlying a portion of the said forming wire for removing water from the said fiber suspension or slurry on the said portion of the forming wire, and
- a collector (19) underlying the said wire for collecting additional water removed from the said fiber suspension or slurry on the said forming wire.

4. Apparatus according to the claim 2 or 3, **characterized in that** the second inlet piping is provided with at least one further deaerating and/or degassing centrifugal pump (17) for supplying substantially air-free and/or gas-free water from the said water collecting means (15) into the said first inlet piping in order to stabilize and dilute fiber suspension or slurry flowing therein to a consistency, preferably between about 0.5 and 1.0%, suitable for depositing the said fiber suspension or slurry from the head box (11) into a web form onto the forming wire.

5. Apparatus according to anyone of the claims 1 to 4, **characterized in that** the said first and second inlet piping are both provided with at least one degassing and/or deaerating centrifugal pump (16, 17, 18) upstream of a joint of the first and second inlet piping into a flow connection with each other.

6. Apparatus according to claim 1, **characterized in that** the second inlet piping comprises a first branch for conveying collected water from the suction box (15) to the pipe system (20) and a second branch for conveying collected water from the collector (19) to the pipe system (20), and that one degassing and/or deaerating pump (17) is interposed in the first branch for pumping the collected water as substantially gas-free water from the suction box (15) to the first inlet piping upstream of the head box, and that another degassing and/or deaerating pump (18) is interposed in the second branch for pumping the collected water as substantially gas-free water from the collector (19) to the first inlet piping upstream of the head box, and so for stabilizing and diluting fiber suspension or slurry in the first inlet piping in two successive steps from a consistency of about between 3% and 5% to a consistency of about between 0.5% and 1.0%, in which consistency fiber suspension or slurry is depositable from the said head box (11) into a form of a web onto the said forming section (12) of the wire.

7. Apparatus according to claim 6, **characterized in that** the one degassing pump (17) interposed in the first branch is a suction box discharge pump maintaining a continuous underpressure condition in the suction box (15).

8. Apparatus according to claim 3, **characterized in that** a further degassing pump (17) is provided as a suction box discharge pump for maintaining a continuous underpressure condition in the suction box (15) and for supplying substantially gas-free and/or air-free water into part of the fiber suspension or slurry flow to be conveyed into the head box (11), and that a second further degassing pump (18) is provided as a discharge pump of the collector (19) underlying the wire for recycling collected water therefrom substantially gas-free and/or air-free into part of the fiber suspension or slurry flow to be conveyed into the head box (11), and that at least one third further degassing pump (16) is interposed in the inlet piping for supplying aqueous and substantially gas-free and/or air-free fiber suspension or slurry to the suction side of the second degassing pump (18).

9. Apparatus according to claim 3, **characterized in that** a further degassing pump (17) is provided as a suction box (15) discharge pump for maintaining a continuous underpressure condition in the suction box and for supplying substantially gas-free and/or air-free water into part of the fiber suspension or slurry flow to be conveyed into the head box (11), and that a second further degassing pump (18) is provided as a discharge pump of the collector (19) underlying the wire for recycling collected water therefrom substantially gas-free and/or air-free back into the pulp tank (1) or into the inlet piping from the pulp tank (1), and that at least one further third degassing pump (16) is interposed in the inlet piping for supplying aqueous and substantially gas-free and/or air-free fiber suspension or slurry to the suction side of the further degassing pump (17).

10. Apparatus according to the claim 8 or 9, **characterized in that** the third further degassing pump (16) supplies aqueous and substantially gas-free and/or air-free fiber suspension or slurry of low-consistency
- to the suction side of either the further degassing pump (17) or the second further degassing pump (18); or
- to the suction side of both the further degassing pump (17) and the second further degassing pump (18).

11. Method of processing the approach flow of aqueous fiber suspension or slurry for supplying pulp slurry to a paper machine, in which method water drained through the wire of the paper machine is collected and recycled into part of aqueous fiber suspension or slurry flow to be transferred onto a web forming section (12) of the paper machine wire, **characterized in that** air and/or gas is removed from the water drained through the wire by at least one degassing and/or deaerating pump (17, 18) and substantially gas-free and/or air-free water is supplied by means of the very same at least one degassing and/or deaerating pump (17, 18) into part of the fiber suspension or slurry flow to be transferred onto the web forming section (12) of the wire for stabilizing the flow and diluting the same into a suitable consistency, preferably to a consistency between 0.5% and 1.0%, in which consistency the pulp slurry is depositable into a web form onto the wire.

12. Method according to the claim 11, **characterized in that** the consistency of the pulp slurry to be supplied onto the web forming section (12) is diluted in two successive steps by substantially gas-free and/or air-free water supplied from a suction box (15) underlying the web forming section (12) of the wire and by substantially gas-free and/or air-free water supplied from an additional water collector (19) underlying the wire.

13. Approach flow apparatus for a paper making machine for processing fiber suspension or slurry and for conveying a stabilized suspension or slurry flow to a web forming section (12) of a wire of the paper making machine, the apparatus comprising a pipe system (20) having an outlet piping leading towards the web forming section (12) and an inlet piping, said inlet piping being formed of a first inlet piping beginning from a pulp tank (1) or from a flow control valve (3) located downstream of a level chest (2), and of a second inlet piping in flow communication with the first inlet piping and acting as a so-called short circulation for recycling water drained through the wire, the inlet piping of the pipe system being provided with at least one centrifugal pump for accomplishing the fiber suspension or slurry flow, and the apparatus being further provided with means for removing air and/or gas from the fiber suspension or slurry and with means for discharging the removed air and/or gas to a location outside the pipe system (20), **characterized in that** the second inlet piping comprises a first branch for conveying collected water from the suction box (15) to the pipe system (20) and a second branch for conveying collected water from the collector (19) to the pipe system (20), and that one degassing and/or deaerating pump (17) is interposed in the first branch for pumping the collected water as substantially gas-free from the suction box (15) to the first inlet conduit upstream of the head box, and that another degassing and/or deaerating pump (18) is interposed in the second branch for pumping the collected water as substantially gas-free from the collector (19) to the first inlet conduit upstream of the head box, and so for stabilising and diluting fiber suspension or slurry in the first inlet conduit in two successive steps from a consistency of about between 3% and 5% to a consistency of about between 0.5% and 1.0%, in which consistency fiber suspension or slurry is depositable from the head box (11) into a form of a web onto the forming section (12).

## Patentansprüche

1. Stoffverteilungsanlage für eine Papiermaschine zur Behandlung von Fasersuspension oder Aufschlämmung und zur Beförderung einer stabilisierten Suspension oder Aufschlämmung zu einem Bahnbildungsabschnitt (12) eines Siebs der Papiermaschine, welche Anlage ein Rohrsystem (20) umfaßt, das eine zum Bahnbildungsabschnitt (12) hin führende Austrittsrohrleitung und eine Eintrittsrohrleitung aufweist, welche Eintrittsrohrleitung aus einer ersten, von einem Stoffbehälter (1) oder einem von einem Ausgleichstrog (2) stromabwärts angeordneten Durchflußmengenregelventil (3) ausgehenden Eintrittsrohrleitung und einer zweiten, in Fließverbindung mit der ersten Eintrittsrohrleitung stehenden und zur Rückführung von durch das Papiermaschinensieb abgezogenem Wasser als sog. kurzer Umlauf dienenden Eintrittsrohrleitung gebildet wird, wobei die Eintrittsrohrleitung des Rohrsystems - um Strömung von Fasersuspension oder Aufschlämmung zustandezubringen - mit mindestens einer Kreiselpumpe versehen ist, und die Anlage ferner mit Mitteln zur Entfernung von Luft und/oder Gas aus der Fasersuspension oder Aufschlämmung und mit Mitteln zur Ableitung der entfernten Luft und/oder des Gases zu einer Stelle außerhalb des Rohrsystems (20) versehen ist, dadurch **gekennzeichnet**, daß es sich bei der Gasentfernungsvorrichtung um eine entgasende und/oder entlüftende, in der ersten Eintrittsrohrleitung unmittelbar stromabwärts entweder vom Stoffbehälter (1) oder dem Durchflußmengenregelventil (3) angeordnete Pumpe (16) handelt.

2. Anlage gemäß Anspruch 1, dadurch **gekennzeichnet**, daß
a) die Austrittsrohrleitung des Rohrsystems zu einem Stoffauflauf (11) der Papiermaschine führt, zur Aufgabe von Fasersuspension oder -auschlämmung zum Bahnbildungsabschnitt (12) des Papiermaschinensiebs und zur Bildung der Bahn darauf in Form einer wäßrigen Schicht aus Fasersuspension oder Aufschlämmung; und
b) die Anlage ferner Mittel (15, 19) umfaßt, zum Auffangen zumindest teilweise des aus der wäßrigen Schicht der Bahn aus Fasersuspension oder Aufschlämmung im Bahnbildungsabschnitt (12) des Siebs abgezogenen Wassers und zur Beförderung des Wassers zur zweiten Eintrittsrohrleitung des Rohrsystems (20).

3. Anlage gemäß Anspruch 2, dadurch **gekennzeichnet**, daß die Mittel fürs Auffangen des aus der Fasersuspension oder Aufschlämmung entfernten Wassers bestehen aus:
- einem Saugkasten (15) unter einem Abschnitt des Bahnbildungssiebs zur Entfernung von Wasser aus der Fasersuspension oder Aufschlämmung auf besagtem Abschnitt des Bahnbildungssiebs, und
- einem Sammler (19) unter dem Papiermaschinensieb fürs Auffangen zusätzlichen Wassers, das aus der Fasersuspension oder Aufschlämmung auf dem Bahnbildungssieb entfernt wird.

4. Vorrichtung gemäß Anspruch 2 oder 3, dadurch **gekennzeichnet**, daß die zweite Eintrittsrohrleitung mit zumindest einer weiteren entlüftenden und/oder entgasenden Kreiselpumpe (17) versehen ist zur Beförderung von im wesentlichen luftfreiem und/oder gasfreiem Wasser aus dem Wassersammler (15) in die erste Eintrittsrohrleitung, um die darin fließende Fasersuspension oder Aufschlämmung auf eine Stoffdichte von vorzugsweise rund 0,5 bis 1,0 % zu stabilisieren und verdünnen, die zur Auftragung der Fasersuspension oder der Aufschlämmung durch den Stoffauflauf (11) in Bahnform auf das Bahnbildungssieb geeignet ist.

5. Vorrichtung gemäß einem der Ansprüche 1 bis 4, dadurch **gekennzeichnet**, daß die erste und zweite Eintrittsrohrleitung beide zumindest mit einer entgasenden und/oder entlüftenden Kreiselpumpe (16, 17, 18) stromaufwärts von der Verbindungsstelle der ersten und zweiten Austrittsrohrleitung in Fließverbindung miteinander versehen sind.

6. Vorrichtung gemäß Anspruch 1, dadurch **gekennzeichnet**, daß die zweite Eintrittsrohrleitung eine erste Verzweigung zur Beförderung des aufgefangenen Wassers vom Saugkasten (15) zum Rohrsystem (20) und eine zweite Verzweigung zur Beförderung des aufgefangenden Wasser vom Sammler (19) zum Rohrsystem (20) umfaßt und daß eine Entgasungs- und/oder Entlüftungspumpe (17) in der ersten Verzweigung angeordnet ist zum Pumpen des aufgefangenen Wassers als im wesentlichen gasfreies Wasser vom Saugkasten (15) zur ersten Eintrittsrohrleitung stromaufwärts vom Stoffauflauf und daß eine andere Entgasungs- und/oder Entlüftungspumpe (18) in der zweiten Verzweigung angeordnet ist zum Pumpen des aufgefangenen Wassers als im wesentlichen gasfreies Wasser vom Sammler (19) zur ersten Eintrittsrohrleitung stromaufwärts vom Stoffauflauf und somit zur Stabilisierung und Verdünnung der Fasersuspension oder Aufschlämmung in der ersten Rohrleitung in zwei aufeinanderfolgenden Stufen von einer Stoffdichte von rund 3 bis 5 % auf eine Stoffdichte von rund 0,5 bis 1,0 %, mit welcher Stoffdichte Fasersuspension oder Aufschlämmung aus dem Stoffauflauf (11) in Form einer Bahn auf den Bahnbildungsabschnitt (12) des Papiermaschinensiebs auftragbar ist.

7. Vorrichtung gemäß Anspruch 6, dadurch **gekennzeichnet**, daß die eine in der ersten Verzweigung angeordnete Entgasungspumpe (17) eine Saugkasten-Absaugpumpe ist, die kontinuierliche subatmosphärische Druckverhältnisse im Saugkasten (15) aufrechterhält.

8. Vorrichtung gemäß Anspruch 3, dadurch **gekennzeichnet**, daß eine weitere Entgasungspumpe (17) als Saugkasten-Absaugpumpe vorgesehen ist zur Aufrechterhaltung von kontinuierlichen subatmosphärischen Druckverhältnissen im Saugkasten (15) und zur Einführung von hauptsächlich gasfreiem und/oder luftfreiem Wasser in einen Teil der zum Stoffauflauf (11) zu befördernden Fasersuspensions- oder Aufschlämmungsströmung und daß eine zweite weitere Entgasungspumpe (18) als Absaugpumpe des unter dem Papiermaschinensieb liegenden Sammlers (19) vorgesehen ist zur Rückführung des aufgefangenen Wassers daraus im wesentlichen gasfrei und/oder luftrei in einen Teil der zum Stoffauflauf (11) zu befördernden Fasersuspensions- oder Aufschlämmungsströmung, und daß zumindest eine dritte weitere Entgasungspumpe (16) in der Eintrittsrohrleitung angeordnet ist zur Aufgabe von wäßriger und im wesentlichen gasfreier und/oder luftfreier Fasersuspension oder Aufschlämmung zur Saugseite der zweiten Entgasungspumpe (18).

9. Vorrichtung gemäß Anspruch 3, dadurch **gekennzeichnet**, daß eine weitere Entgasungspumpe (17) als Absaugpumpe (15) des Saugkastens vorgesehen ist zur Aufrechterhaltung von kontinuierlichen subatmosphärischen Druckverhältnissen im Saugkasten und zur Zuführung von hauptsächlich gasfreiem und/ oder luftfreiem Wasser in einen Teil der zum Stoffauflauf (11) zu befördernden Fasersuspensions- oder Aufschlämmungsströmung und daß eine zweite weitere Entgasungspumpe (18) als Absaugpumpe des unter dem Papiermaschinensieb liegenden Sammlers (19) zur Leitung des aufgefangenen Wassers daraus im wesentlichen gasfrei und/oder luftrei zurück in den Stoffbehälter (1) oder in die Eintrittsrohrleitung vom Stoffbehälter (1), und daß zumindest eine dritte weitere Entgasungspumpe (16) in der Eintrittsrohrleitung angeordnet ist zur Leitung von wäßriger und im wesentlichen gasfreier und/oder luftfreier Fasersuspension oder Aufschlämmung zur Saugseite der weiteren Entgasungspumpe (17).

10. Vorrichtung gemäß Anspruch 8 oder 9, dadurch **gekennzeichnet**, daß die dritte Entgasungspumpe (16) wäßrige und im wesentlichen gasfreie und/oder luftfreie Fasersuspension oder Aufschlämmung niedriger Stoffdichte befördert
- zur Saugseite entweder der weiteren Entgasungspumpe (17) oder der zweiten weiteren Entgasungspumpe (18); oder
- zur Saugseite sowohl der weiteren Entgasungspumpe (17) oder als auch der zweiten weiteren Entgasungspumpe (18).

11. Verfahren zur Behandlung des Zuflusses von wäßriger Fasersuspension oder Aufschlämmung zur Aufgabe von Stoffaufschlämmung in eine Papiermaschine, bei welchem Verfahren das durch das Papiermaschinensieb abgezogene Wasser aufgefangen und in einen Teil der auf den Bahnbildungsabschnitt (12) des Papiermaschinensiebs aufzutragenden wäßrigen Suspensions- oder Aufschlämmungsströmung zurückgeführt wird, dadurch **gekennzeichnet**, daß Luft und/oder Gas aus dem durch das Papiernmaschinensieb abgezogenen Wasser durch mindestens eine Entgasungs- und/oder Entlüftungspumpe (17, 18) entfernt wird und im wesentlichen gasfreies und/oder luftfreies Wasser mit derselben, zumindest einen Entgasungs- und/oder Entlüftungspumpe (17, 18) in einen Teil der auf den Bahnbildungsabschnitt (12) des Siebs aufzutragenden Fasersuspensions- oder Aufschlämmungsströmung geleitet wird, zur Stabilisierung der Strömung und Verdünnung derselben auf eine passende Stoffdichte, vorzugsweise auf eine Stoffdichte zwischen 0,5 und 1,0 %, bei welcher Stoffdichte die Stoffaufschlämmung auf den Bahnbildungsabschnitt des Siebs auftragbar ist.

12. Verfahren gemäß Anspruch 11, dadurch **gekennzeichnet**, daß die Stoffdichte der auf den Bahnbildungsabschnitt (12) aufzutragenden Stoffaufschlämmung in zwei aufeinanderfolgenden Stufen verdünnt wird durch hauptsächlich gas- und/oder luftfreies Wasser von einem unter dem Bahnbildungsabschnitt (12) des Papiermaschinensiebs liegenden Saugkasten (15) und durch hauptsächlich gas- und/ oder luftfreies Wasser von einem zusätzlichen unter dem Papiermaschinensieb liegenden Wassersammler (19).

13. Stoffverteilungsanlage für eine Papiermaschine zur Behandlung von Fasersuspension oder Aufschlämmung und zur Beförderung einer stabilisierten Suspensions- oder Aufschlämmungsströmung zu einem Bahnbildungsabschnitt (12) eines Siebs der Papiermaschine, welche Anlage ein Rohrsystem (20) umfaßt, das eine zum Bahnbildungsabschnitt (12) hin führende Austrittsrohrleitung und eine Eintrittsrohrleitung aufweist, welche Eintrittsrohrleitung aus einer ersten, von einem Stoffbehälter (1) oder einem von einem Ausgleichstrog (2) stromabwärts angeordneten Durchflußmengenregelventil (3) ausgehenden Eintrittsrohrleitung und einer zweiten, in Fließverbindung mit der ersten Eintrittsrohrleitung stehenden und zur Rückführung von durch das Papiermaschinensieb abgezogenem Wasser als sog. kurzer Umlauf dienenden Eintrittsrohrleitung gebildet wird, wobei die Eintrittsrohrleitung des Rohrsystems - um die Strömung von Fasersuspension oder Aufschlämmung zustandezubringen
- mit mindestens einer Kreiselpumpe versehen ist, und die Anlage ferner mit Mitteln zur Entfernung von Luft und/oder Gas aus der Fasersuspension oder Aufschlämmung und mit Mitteln zur Ableitung der entfernten Luft und/oder des Gases zu einer Stelle außerhalb des Rohrsystems (20) versehen ist, dadurch **gekennzeichnet**, daß die zweite Eintrittsrohrleitung eine erste Verzweigung umfaßt zur Beförderung des aufgefangenen Wassers vom Saugkasten (15) zum Rohrsystem (20) und eine zweite Verzweigung zur Beförderung des aufgefangenen Wassers vom Sammler (19) zum Rohrsystem (20) und daß in der ersten Verzweigung eine Entgasungs- und/oder Entlüftungspumpe (17) angeordnet ist zum Pumpen des aufgefangenen Wassers im wesentlichen gasfrei vom Saugkasten (15) zum ersten Eintrittskanal stromaufwärts vom Stoffauflauf und daß eine zweite Entgasungs- und/ oder Entlüftungspumpe (18) in der zweiten Verzweigung angeordnet ist zum Pumpen des aufgefangenen Wassers im wesentlichen gasfrei vom Sammler (19) zum ersten Eintrittskanal stromaufwärts vom Stoffauflauf und somit zur Stabilisierung und Verdünnung von Fasersuspension oder Aufschlämmung im ersten Eintrittskanal in zwei aufeinanderfolgenden Stufen von einer Stoffdichte von etwa 3 bis 5 % auf eine Stoffdichte von etwa 0,5 bis 1,0 %, bei welcher Stoffdichte Fasersuspension oder Aufschlämmung vom Stoffauflauf (11) in Form einer Bahn auf den Bahnbildungsabschnitt (12) auftragbar ist.

## Revendications

1. Distributeur de courant de pâte en avant d'une machine à papier pour traiter une suspension dense ou de fibres et pour délivrer un courant stabilisé d'une suspension épaisse ou de fibres à une section de formation de la feuille (12) d'une toile de la machine à papier, le dispositif comprenant un réseau de tuyauterie (20) présentant une canalisation d'évacuation menant à la section de formation de la feuille (12) et une canalisation d'admission, ladite canalisation d'admission étant réalisée sous forme d'une première canalisation d'admission partant d'un réservoir à pâte (1) ou d'un régulateur de débit (3) situé en aval d'un bac tampon (2), et d'une seconde canalisation d'admission en communication d'écoulement avec la première canalisation d'admission et agissant en tant que circulation dite courte pour recycler de l'eau drainée à travers la toile, la canalisation d'admission du réseau de tuyauterie comportant au moins une pompe centrifuge pour réaliser le flux de suspension épaisse ou de fibres, et le dispositif étant en outre pourvu d'un moyen pour enlever de l'air et/ou du gaz de la suspension dense ou de fibres et d'un moyen pour évacuer l'air et/ou le gas enlevé vers un emplacement à l'extérieur du réseau de tuyauterie (20), caractérisé en ce que ledit moyen d'enlèvement du gaz est une pompe de dégazage et/ou de désaération (16) située dans la première canalisation d'admission immédiatement en aval soit du réservoir à pâte (1) soit du régulateur de débit (3).

2. Dispositif selon la revendication 1, caractérisé en ce que :
a) la canalisation d'évacuation dudit réseau de tuyauterie débouche sur une caisse de tête (11) de la machine à papier pour fournir de la suspension épaisse ou de fibres à ladite section de formation de la feuille (12) de la toile de machine à papier et pour y réaliser la feuille sous forme d'une couche aqueuse de suspension épaisse ou de fibres; et,
b) le dispositif comprend en outre des moyens pour recueillir au moins en partie l'eau drainée de la couche aqueuse de la feuille de ladite suspension épaisse ou de fibres dans ladite section de formation (12) de la toile et pour conduire ladite eau à la seconde canalisation d'admission du réseau de tuyauterie (20).

3. Dispositif selon la revendication 2, caractérisé en ce que les moyens pour recueillir l'eau drainée de ladite suspension épaisse ou de fibres comprennent :
- une caisse aspirante (15) sous-jacente à une portion de ladite toile de formation pour enlever l'eau de ladite suspension épaisse ou de fibres sur ladite portion de la toile de formation, et
- un collecteur (19) sous-jacent à ladite toile pour recueillir l'eau supplémentaire éliminée de ladite suspension épaisse ou de fibres sur ladite toile de formation.

4. Dispositif selon la revendication 2 ou 3, caractérisé en ce que la seconde canalisation d'admission comporte au moins une pompe centrifuge de désaération et/ou de dégazage additionnelle (17) pour délivrer de l'eau sensiblement sans air et/ou sans eau libre depuis le moyen collecteur d'eau (15) dans ladite première canalisation d'admission afin de stabiliser et de diluer la suspension épaisse ou de fibres s'écoulant dans celle-ci jusqu'à une consistance de préférence comprise entre environ 0,5% et 1,0%, qui est appropriée pour délivrer ladite suspension épaisse ou de fibres depuis la caisse de tête (11) sous la forme d'une feuille sur la toile de formation.

5. Dispositif selon l'une quelconque des revendications 1 à 4, caractérisé en ce que lesdites première et deuxième canalisations d'admission sont l'une et l'autre pourvues d'au moins une pompe centrifuge de dégazage et/ou de désaération (16, 17,18) en amont d'un joint des première et seconde canalisations d'admission dans une connection d'écoulement l'une avec l'autre.

6. Dispositif selon la revendication 1, caractérisé en ce que la seconde canalisation d'admission comprend une première branche pour conduire de l'eau recueillie depuis la caisse aspirante (15) au réseau de tuyauterie (20) et une seconde branche pour conduire de l'eau recueillie depuis le collecteur (19) au réseau de tuyauterie (20), et en ce qu'une pompe de dégazage et/ou de désaération (17) est intercalé dans la première branche pour pomper l'eau collectée en tant qu'eau sensiblement exempte de gaz de la caisse aspirante (15) à la première canalisation d'admission en amont de la caisse aspirante (15) à la première canalisation d'admission en amont de la caisse de tête, et en ce qu'une autre pompe de dégazage et/ou de désaération (18) est interposée dans la seconde branche afin de pomper l'eau recueillie en tant qu'eau sensiblement exempte de gaz, depuis le collecteur (19) jusqu'à la première canalisation d'admission en amont de la caisse de tête, et ainsi pour stabiliser et dliuer la suspension épaisse ou de fibres dans la première canalisation d'admission au cours de deux étapes successives à partir d'une consistance comprise entre 0,5% et 1,0% environ, dans laquelle consistance la suspension épaisse ou de fibres provenant d'une caisse de tête (11) peut se déposer sous la forme d'une feuille sur ladite section de formation (12) de la toile.

7. Dispositif selon la revendication 6, caractérisé en ce que une pompe de dégazage (17) intercalée dans la première branche est une pompe de décharge d'une caisse aspirante maintenant un état de dépression continu dans la caisse aspirante (15).

8. Dispositif selon la revendication 3, caractérisé en ce que une pompe de dégazage supplémentaire (17) est prévue en tant que pompe de décharge de la caisse aspirante pour maintenir un état de dépression continu dans la caisse aspirante (15) et pour fournir de l'eau sensiblement exempte de gaz et/ou d'air dans une partie de la suspension épaisse ou de fibres devant être conduite dans la caisse de tête (11), et en ce qu'une seconde pompe de dégazage supplémentaire (18) est prévue en tant que pompe d'évacuation du collecteur (19) sous-jacente à la toile pour recycler l'eau recueillie sensiblement exempte de gaz et/ou d'air à partir de là dans une partie de la suspension épaisse ou de fibres devant être conduite dans la caisse de tête (11), et en ce qu'au moins une troisième pompe de dégazage (16) est intercalée dans la canalisation d'admission pour délivrer la suspension épaisse ou de fibres aqueuses et sensiblement exempte de gaz et/ou d'air, au côté d'aspiration de la seconde pompe de dégazage (18).

9. Dispositif selon la revendication 3, caractérisé en ce qu'une autre pompe de dégazage (17) est prévue en tant que pompe d'évacuation de la caisse aspirante (15) pour maintenir un état continu de dépression dans la caisse aspirante et pour fournir de l'eau sensiblement exempte de gaz et/ou d'air dans une partie de la suspension épaisse ou de fibres devant être conduite dans la caisse de tête (11), et en ce qu'une seconde pompe de dégazage supplémentaire (18) est prévue en tant que pompe d'évacuation du collecteur (19), sous-jacente à la toile, pour recycler de l'eau recueillie sensiblement sans gaz et/ou sans air, vers le réservoir à pâte (1), et en ce qu'au moins une troisième pompe de dégazage (16) est interposée dans la canalisation d'admission pour délivrer de la suspension épaisse ou de fibres aqueuse et sensiblement exempte de gaz et/ou d'air au côté d'aspiration de la pompe de dégazage supplémentaire (17).

10. Dispositif selon la revendication 8 ou 9, caractérisé en ce que la troisième pompe de dégazage supplémentaire (16) délivre de la suspension épaisse ou de fibres aqueuse et sensiblement exempte de gaz et/ou d'air, de consistance faible :
- au côté d'aspiration soit de la pompe de dégazage supplémentaire (17) soit de la seconde pompe de dégazage supplémentaire (18); ou
- au côté d'aspiration à la fois de la pompe de dégazage supplémentaire (17) et de la seconde pompe de dégazage supplémentaire (18).

11. Procédé pour mettre en oeuvre la distribution du courant d'une suspension épaisse ou de fibres aqueuse pour délivrer de la suspension de pâte en avant d'une machine à papier, dans lequel procédé de l'eau drainée à travers la toile de la machine à papier est recueillie et recyclée dans une partie du courant de la suspension épaisse ou de fibres aqueuse devant être transférée sur une section de formation de la feuille (12) de la toile de la machine à papier, caractérisé en ce que l'on élimine de l'air et/ou du gaz de l'eau drainée à travers la toile par au moins une pompe de dégazage et/ou de désaération (17, 18) et de l'eau sensiblement exempte de gaz et/ou d'air est délivrée au moyen de la même au moins une pompe de dégazage et/ou de désaération (17, 18) dans une partie du courant de la suspension épaisse ou de fibres devant être transférée sur la section de formation de la feuille (12) de la toile pour stabiliser le courant et pour diluer celui-ci à une consistance convenable, de préférence à une consistance comprise entre 0,5% et 1,0%, consistance pour laquelle il est possible de déposer la suspension pâteuse sous la forme d'une feuille sur la toile.

12. Procédé selon la revendication 11 caractérisé en ce que la consistance de la suspension pâteuse devant être délivrée sur la section de formation de la feuille (12) est diluée au cours de deux étapes successives par l'eau sensiblement exempte de gaz et/ou d'air fournie depuis une caisse aspirante (15) sous-jacente à la section de formation de la feuille (12) de la toile et par l'eau sensiblement exempte de gaz et/ou d'air délivrée depuis un collecteur d'eau supplémentaire (19) sous-jacent à la toile.

13. Distributeur de courant de pâte en avant d'une machine à papier pour traiter de la suspension épaisse ou de fibres et pour conduire un écoulement stabilisé de suspension épaisse ou de fibres à une section de formation de la feuille (12) d'une toile de la machine à papier, le dispositif comprenant un réseau de tuyauterie (20) présentant une canalisation d'évacuation menant à la section de formation de la feuille (12) et une canalisation d'admission, ladite canalisation d'admission étant formée d'une première canalisation d'admission partant d'un réservoir à pâte (1) ou d'un régulateur de débit (3) situé en aval d'un bac tampon (2), et d'une seconde canalisation d'admission en communication d'écoulement avec la première canalisation d'admission et faisant fonction de circulation dite courte pour recycler l'eau drainée à travers la toile, la canalisation d'admission du réseau de tuyauterie étant pourvue d'au moins une pompe centrifuge pour réaliser le courant de suspension épaisse ou de fibres, et le dispositif étant muni en outre de moyens pour éliminer l'air et/ou du gaz de la suspension épaisse ou de fibres et de moyens pour évacuer l'air et/ou le gaz éliminé vers un endroit à l'extérieur du réseau de tuyauterie (20), caractérisé en ce que la seconde canalisation d'admission comprend une première branche pour conduire de l'eau recueillie de la caisse aspirante (15) au réseau de tuyauterie (20) et une seconde branche pour amener de l'eau recueillie du collecteur (19) au réseau de tuyauterie (20) et en ce qu'une pompe de dégazage et/ou de désaération (17) est intercalée dans la première branche pour pomper l'eau recueillie sensiblement exempte de gaz de la caisse aspirante (15) vers le premier conduit d'admission en amont de la caisse de tête, et en ce qu'une autre pompe de dégazage et/ou de désaération (18) est interposée dans la seconde branche pour pomper l'eau recueillie sensiblement exempte de gaz du collecteur (19) vers le premier conduit d'admission en amont de la caisse de tête, et ainsi pour stabiliser et diluer la suspension épaisse ou de fibres dans le premier conduit d'admission au cours de deux étapes successives depuis une consistance comprise entre environ 3% et 5% jusqu'à une consistance comprise entre environ 0,5% et 1,0%, consistance pour laquelle la suspension épaisse ou de fibres provenant de la caisse de tête (11) peut se déposer sous la forme d'une feuille, sur la section de formation (12).
